# EUROPEAN PATENT APPLICATION

(11) **EP 4 512 788 A1**
(43) Date of publication of application: **26.02.2025**
(21) Application number: 23791406.4
(22) Date of filing: 03.04.2023
(51) Int. Cl.: C04B 33/34, C04B 14/22

(54) **COLOURABLE TRANSLUCENT WHITE CERAMIC COMPOUND BASED ON A FRIT COMPRISING CALCIUM AND SODIUM**

(30) Priority: 18.04.2022 ES 202230345
(71) Applicant: Thesize Surfaces, S.L., 12550 Castellón (ES)
(72) Inventor: SEGARRA VIÑALS, Francisco, 12004 Castellón (ES)
(74) Representative: Fernández-Pacheco, Aurelio Fernández
(86) International application number: PCT/IB2023/053345
(87) International publication number: WO 2023/203410

(57) **Abstract**

White, translucent, colourable ceramic compound based on a calcium sodium frit that devitrifies sodium anorthite in the SiO2-Al2O3-CaO-Na2O system to be used as the main raw material (60% - 90%) in porcelain stoneware compositions for the production of large format sheets (up to 2 metres). **The** frit will provide parts with an elevated whiteness without the need to introduce opacifiers such as zirconium silicate, although these could also be added, together with aluminas, to obtain a higher level of whiteness. On the other hand, it will provide the ceramic compound a high translucency, which will allow it to have a high colour development with the addition of inorganic pigments.

## Description

### PURPOSE OF THE INVENTION

This descriptive memory refers to an invention concerning the development of a calcium and sodium ceramic frit composition that devitrifies sodium anorthite in the SiO2-Al2O3-CaO-Na2O system to be used as a main raw material (from 60% - to 90%) in porcelain stoneware compositions for the production of large format sheets (up to 2 metres). The frit will provide parts with an elevated whiteness without the need to introduce opacifiers such as zirconium silicate, although these could also be added, together with aluminas, to obtain a higher level of whiteness. On the other hand, it will give the ceramic composition a high translucency, which will enable it to have a high level of colour development with the addition of inorganic pigments. In this way, a wide palette of colours will be achieved, from very intense shades to pastel tones. In addition, the resulting ceramic composition can be processed in a conventional ceramics kiln, as aspects such as melt viscosity or adhesion to the rollers have been taken into account during development. The ceramic material can be used for the manufacture of ceramic pieces of all kinds of formats and thicknesses and can also be used for the manufacture of large format slabs in which the different whites and colours to be developed from this new ceramic material can be mixed throughout their mass (even in the form of veins imitating natural stone). Until now, white ceramic compositions were difficult to mix with the coloured ones when attempting to imitate natural veins throughout their mass in a large format slab, because there are stresses involved during the firing process due to the difference in the coefficient of thermal expansion (CTE) and the linear shrinkage between them. White and coloured ceramic compositions come from different formulations with different characteristics, in the case of low CTE targets, mainly due to the use of opacifiers such as zirconium silicate. The great advantage of using the same material to achieve different whites and colours is that they can be mixed on the same board without causing deformations and stresses in the final fired board.

### FIELD OF APPLICATION OF THE INVENTION

This invention is suitable for use in the ceramic materials manufacturing industry.

### BACKGROUND TO THE INVENTION

In the field of ceramic materials processing there are already compositions of ceramic material to achieve a certain whiteness, a certain transparency or a certain pigmentation.

However, these treatments are achieved independently, whereas the present invention achieves at the same time a high level of whiteness and translucency, with the possibility of being colourable, based on a specific composition of calcium and sodium frit that allows the same material to be used to achieve different whites and colours mixed in the same board, without causing deformations or stresses in the final fired board.

We can cite European Patent No. 19382876.1 which relates to an artificial agglomerated stone material comprising inorganic fillers and a hardened binder, where the binder is an organic resin and the inorganic fillers comprise feldspar. However, this invention refers to a different material than the one used in the patent applied for, namely "Quartz", which consists of a board made of Quartz / Feldspar powder/sand and a resin. Basically the powder is mixed with the resin, then the mixture is compacted in a vibro-compactor and the resin is left to cure; once cured, the surface is polished.

Whereas, in the patent applied for, the final product consists of an atomised pressed ceramic composite, coated with a thin vitreous layer of glaze, heat treated from 1100°C in a given cycle, depending on the thickness (3 to 30 mm)

### DESCRIPTION OF THE INVENTION

The proposed high whiteness, translucent and colourable ceramic material based on a calcium sodium frit that devitrifies sodium anorthite, is composed of a support fired in a conventional ceramic kiln, formed by uniaxial pressing of an atomised powder by means of a hydraulic press, which may also be coated with a glaze on its exposed face.

The atomised powder has been produced by drying, in an atomiser, of a wet-milled ceramics slip in a ball mill. The slip is composed of a frit, clay, kaolin, water, deflocculant and a plasticising additive. Inorganic pigments can also be added as an option, depending on the desired colour of the fired support. In the preferred embodiment of this invention, the frit has the function of increasing the translucency of the ceramic material, without compromising the whiteness of the material. Clay and kaolin have a different function in each part of the process:
- on the one hand, to facilitate the suspension of the barbotine, in order to be able to carry out he grinding and atomisation process with guarantees and,
- on the other hand, provide the atomised product with the appropriate plasticity, which allows it to be pressed in a hydraulic press without difficulty. Furthermore, the clay and kaolin allow the support to absorb part of the humidity of the glaze, maintaining the consistency of the piece in the glazing process and decoration.

The process of obtaining the ceramic material:
1. Characteristics of the frit
2. Characteristics of the support
   - 2.1 Raw Support
   - 2.2 Fired Support
      - 2.2.1 Colour coordinates of the fired support
      - 2.2.2. Characterisation of the support
3. Conclusions

### 1. Characteristics of the frit

**The** frit is a mixture of inorganic chemicals obtained by rapid cooling of a melt, converting the chemicals thus produced into insoluble glassy compounds occurring in the form of granules.

To obtain the frits, the different raw materials were mixed in a dry process; the mixture obtained was then placed in an alumina crucible and subjected to a thermal cycle in an electric laboratory furnace, which consisted of heating from a temperature of 500°C to the maximum temperature (1500-1550°C), to a speed of 10°C/min. **The** crucible with the mixture is kept at maximum temperature for a minimum time determined according to the characteristics of the frit (30-45 minutes), after which the melt is cooled by pouring it over water, thus obtaining the frit.

**To** obtain the frit, the starting point was the formula of the pure mineral anorthite (calcium aluminosilicate).

Since the latter formula could not be fried, K2O was added to melt it. Subsequently, K2O was replaced by Na2O. Lastly on the Na2O frits, the SiO2/Al2O3 ratio and the Na2O/CaO ratio were optimised.

**The** main components of the final frits tested, expressed as oxides, are presented below. **The** percentage of each oxide will depend on the desired values of flux, whiteness, translucency and colour development.

**Table 1. Oxide components of the frits**

| **Rust** | **%** |
|---|---|
| SiO₂ | 45.6 - 60.5 |
| Al₂O₃ | 14.9 - 29.9 |
| CaO | 9.2 - 19.1 |
| Na₂O | 5.1 - 15.0 |
| K₂O | 0.1 - 0.2 |
| Total chromophores (Fe₂O₃+TiO₂) | 0.15 - 0.25 |

Sodium feldspars, quartz, aluminas, lime carbonates and sodium nitrate were used in the frit formulations.

The loading formula used is presented below:

**Table 2. Loading formula of the tested frits**

| **Raw Material** | **%** |
|---|---|
| Sodium feldspar | 40.1 - 63.2 |
| Quartz | 0.0 - 24.7 |
| Alumina | 5.4 - 18.4 |
| Calcium carbonate | 13.4 - 30.3 |
| Sodium nitrate | 0.0 - 16.3 |

Among the tested ceramic composites (frit + clay and kaolin), the ones obtained with the frit formulated for the preferred embodiment are those that best balance the desired properties (whiteness, translucency and optimal colour development).

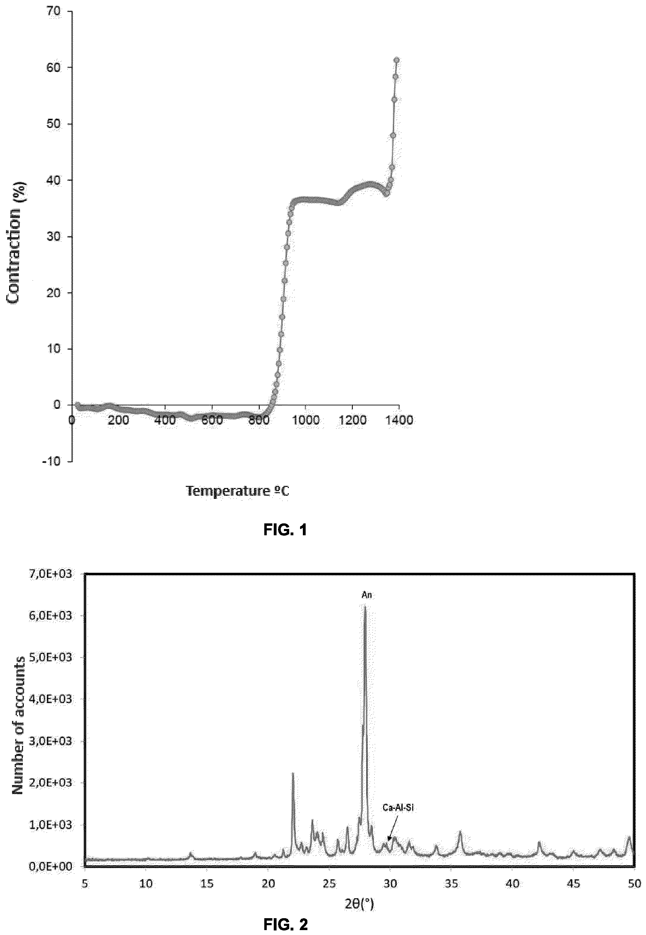

A heating microscope was used to determine the shrinkage-temperature curve, as well as the characteristic temperatures of the frit produced. *(**Fig. 1* *Shrinkage and temperature curve)*

The frit begins to shrink at a temperature of 865°C. In the temperature range 950 - 1150°C the frit undergoes crystallisation. Next the frit continues to shrink up to a temperature of 1335°C. Softening takes place at 1370°C and melting at 1380°C. Due to the nature of the material, it was not possible to detect its sphere temperature (ST).

**Table 3. Characteristic frit temperatures**

| **Characteristic Temperature** | **Frit** |
|---|---|
| Start of contraction (TIC) | 865 |
| Start of crystallisation | 950 |
| End of contraction (TFC) | 1335 |
| Softening (TR) | 1370 |
| Sphere temperature (ST) | - |
| Semisphere temperature (T1\2) | 1375 |
| Melting temperature (MT) | 1380 |

### 2. Characteristics of the support.

### 2.1 Raw Support

**The** raw support is formed by uniaxial pressing in a hydraulic press of an atomised powder obtained by drying, in an atomiser, a ceramic slip that has been wet milled in a ball mill.

A deflocculant (0.7% on the dry solid) is used for milling, which will allow us to regulate the density and viscosity of the slip, thus allowing us to obtain a particle size curve of the atomised material suitable for the subsequent pressing stage. Before spraying, the barbotine is mixed with a plasticising additive (1% on the dry solid), which will give the pressed support the appropriate mechanical resistance to withstand the transport process through the glazing and decoration line, prior to firing.

**Table 4. Loading formula of the ceramic composition**

| **Raw material** | **%** |
|---|---|
| Clay | 10-20 |
| Kaolin | 10-30 |
| Frit | 60-90 |

### 2.2 Fired Support

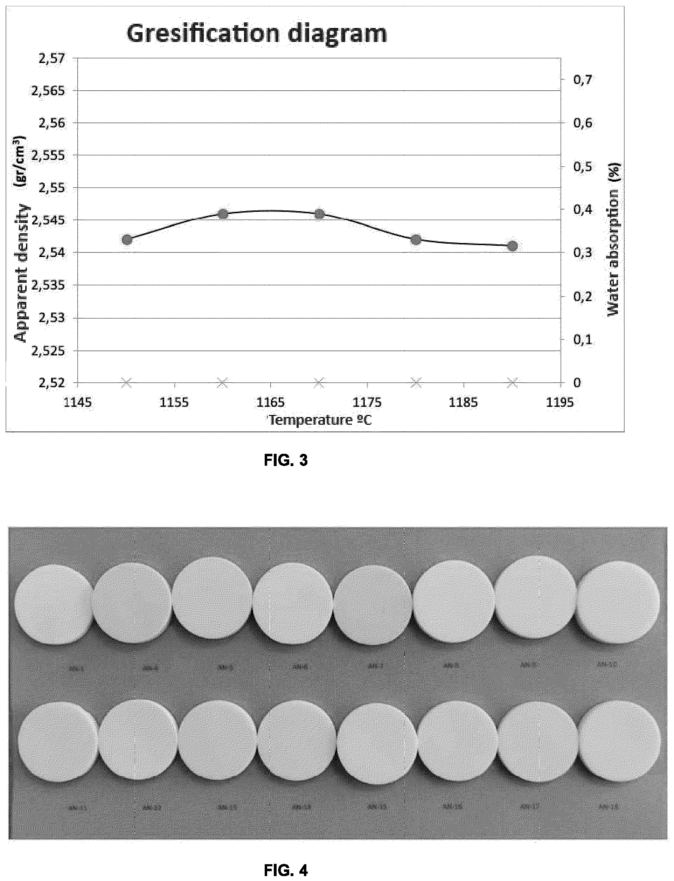

The bulk density and water absorption were tested to determine the temperature suitable for firing the support. *(**Fig 3* *Evolution of bulk density and water absorption of the support with firing temperature)*

### 2.2.1 Colour coordinates of the fired support.

In addition to a high degree of whiteness of the support, it is also interesting that the resulting ceramic composition develops the colours well. White (calcined alumina), black inorganic pigment and blue inorganic pigment have been chosen for this purpose.

**Table 5. Colour coordinates of the pigmented ceramic composite.**

| **Property** | | **+ 2% black** | **+ 2% blue** | **+ 4% Alumina** | **+ 6% Alumina** |
|---|---|---|---|---|---|
| Temperature (°C) | 1150 | 1170 | 1170 | 1190 | 1210 |
| L* | 89.3 | 29.4 | 45.6 | 93.2 | 94.0 |
| a* | -1.6 | 0.7 | 0.5 | -1.1 | -0.8 |
| b* | 6.5 | 0.1 | -29.0 | 4.3 | 4.2 |

It is observed that the development of black colour is adequate, but not so much in the blue, which shows low negative values of the b* coordinate. The addition of alumina to the latter composition provides high whiteness values at appropriate temperatures, which was one of the initially proposed objectives.

### 2.2.2 Characterisation of the support

The coefficient of thermal expansion (CTE) of the ceramic composite was determined by means of a dilatometer. The CTE measures the relative change in length or volume that occurs when a solid body changes temperature.

**Table 6. Expansion coefficients of the ceramic composite.**

| **Property** | **Preferred Ceramic Compound** |
|---|---|
| α25-300 (oC-1) x 10-7 | 54.2 |
| α 25-500 (oC-1) x 10-7 | 59.1 |
| α 25-650 (oC-1) x 10-7 | 64.0 |
| α 500-650 (oC-1) x 10-7 | 79.4 |

For the characterisation of the support, its crystalline phases have been identified by X-ray diffraction (XRD).

Figure 2 *(Identification of crystalline phases by XRD of the ceramic composition)* shows the diffractogram obtained from the support sample, in which the peaks of maximum intensity of the identified phases have been labelled, as well as other characteristic reflections of lower intensity. The following is noted:
- Sodium anorthite (Ca2Na)Al2Si2O8) was detected as a majority phase and Calcium silicon aluminate (hexagonal structure) as a minority phase (Ca2Na6Al8Si8O32).

### 3.Conclusions

It has been noted the complexity of obtaining a single frit that optimises the totality of the requirements: adequate firing temperature both with and without calcined alumina, good colour development and high whiteness, with and without adding calcined alumina.

Among the compositions tested, the one obtained with the frit of the preferred realisation is the one that best balances these properties:
- The proposed ceramic composite provides a good dry bulk density, has a high bulk density when fired, but is stable at working temperatures (1100-1200°C) and does not show pyroplastic deformation at the vitrification temperature.
- The development of black is adequate, not so much in blue, which shows slightly negative values of the b* coordinate. The addition of alumina to this ceramic composite provides high whiteness values at suitable temperatures.
   *Figure 4**. Appearance of ceramic specimens without the addition of pigment.*
   *Figure 5**. Appearance of ceramic specimens with 2% black pigment.*
   *Figure 6**. Appearance of ceramic specimens with 2% blue pigment.*

### DESCRIPTION OF THE DRAWINGS

The figures show explanatory graphs and diffractograms of the high whiteness, translucent and colourable ceramic material based on a calcium frit.
- Figure 1:: It shows a graph of the shrinkage and temperature curve of the frit.
- Figure 2:: It shows a diffractogram identifying the crystalline phases by X-ray diffraction (XRD) of the ceramic composite.
- Figure 3:: It shows a diagram of the ceramic composite's stoneware vitrification. Evolution of the bulk density and water absorption of the support with firing temperature.
- Figure 4:: Appearance of ceramic specimens without the addition of pigment.

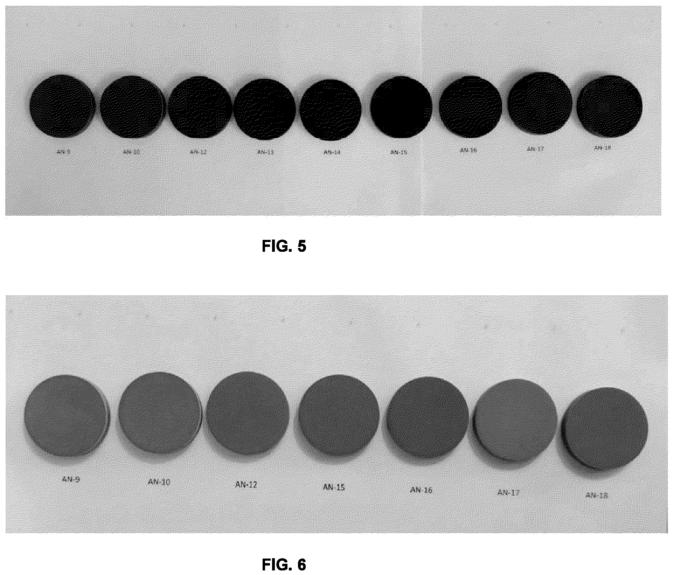

- Figure 5:: Appearance of ceramic specimens with 2% black pigment.
- Figure 6:: Appearance of ceramic specimens with 2% blue pigment.

### PREFERRED IMPLEMENTATION OF THE INVENTION

The preferred ceramic compound is prepared by atomisation of the mixture of the raw materials (frit, clay and kaolin) wet milled (with water and deflocculant). It is then pressed, glazed and fired. The atomisation process only gives it the necessary fluidity so that it can be distributed in an homogeneous way in the mould and can be pressed. The pressed slab is fired and it is this fired ceramic material that possesses the aforementioned characteristics of whiteness, translucency and optimum colour development by the addition of inorganic pigments.

The ceramic composite is based on a frit-based composition (60-90)% plus a mixture of clay and kaolin (10-40)%, as shown in table 4. The use of this frit will provide parts with a high whiteness without the need to introduce opacifiers and will increase its translucency without compromising the whiteness of the material, while allowing for a high colour development with the addition of inorganic pigments.

The characteristic temperatures of the produced frit are reflected in the shrinkage-temperature curve *(**Figure* 1) determined by a heating microscope, which shows that the frit starts to shrink at a temperature of 865°C, then in the temperature range 950 - 1150°C it undergoes crystallisation, and then continues to contract to a temperature of 1335°C. Finally, the softening takes place at 1370°C and melting at 1380°C, without it being possible to detect its sphere temperature due to the nature of the material.

As for the support of the ceramic composite, it was checked by means of the stoneware of the ceramic composition diagram (Figure 3) the evolution of the bulk density and water absorption of the support with the firing temperature. From this diagram we can conclude that the temperature of maximum densification is around 1100--1200°C and that it remains at high values during the subsequent temperatures. In addition, it is observed that during the entire firing range no water absorption of the fired pieces is detected.

To complete the characterisation of the fired support, the crystalline phases present have been identified by means of an X-ray diffractogram (XRD). (Figure 2).

Finally, the suitability of the ceramic composite for colour development has been tested, verifying the high chromatic values obtained with the addition of inorganic pigments, and the possibility of increasing whiteness with the addition of aluminas. Thus, the resulting ceramic material can possibly be used for the manufacture of large format slabs, in which the different whites and colours to be developed can be mixed into all its mass without causing deformations or tensions in the final fired slab.

## Claims

1. A white, translucent, colourable ceramic compound based on a calcium sodium frit, **characterised in that** it is composed of:
• 60 to 90% of frit in the SiO2-Al2O3-CaO-Na2O system to be used as the main raw material in porcelain stoneware compositions, which will provide pieces with high whiteness without the need to introduce opacifiers such as zirconium silicate.
The frit has the following composition expressed as a percentage of major oxides:
| Rust | **%** |
|---|---|
| SiO₂ | 45.6-60.5 |
| Al₂O₃ | 14.9-29.9 |
| CaO | 9.2-19.1 |
| Na2O | 5.1-15.0 |
The frit loading formula is as follows:
| **Raw Material** | **%** |
|---|---|
| Sodium feldspar | 40.1 - 63.2 |
| Quartz | 0.0 - 24.7 |
| Alumina | 5.4 - 18.4 |
| Calcium carbonate | 13.4 - 30.3 |
| Sodium nitrate | 0.0 - 16.3 |
• 10% to 40% of "inorganic raw material". (mixture of Kaolin (10%-30%) and Clay (10%-20%)).
Therefore, the formula of the ceramic compound that the invention advocates is as follows:
| **Raw material** | **%** |
|---|---|
| Clay | 10-20 |
| Kaolin | 10-30 |
| Frit | 60-90 |

2. Process for the production of a white, translucent and colourable ceramic compound based on a calcium sodium frit, according to the first claim, **characterised in that** the product consists of an atomised ceramic composition pressed and/or extruded, which may be covered with a thin vitreous layer of glaze, subjected to a heat treatment from 1100°C in a cycle of a certain duration depending on the thickness (3 to 30 mm).

3. White, translucent, colourable ceramic material compound based on a frit according to the first claim, **characterised in that**, in order to give whiteness to the composition, it devitrifies, during firing, as a majority phase, sodium anorthic (Ca2Na)Al2Si2O8) and as a minority phase calcium silicon aluminate (hexagonal structure) (Ca2Na6Al8Si8O32).

4. White, translucent and colourable ceramic compound based on a calcium sodium frit, according to the first claim, **characterised by** the addition of_of inorganic pigments such as: Fe-Cr based black with a hematite crystalline structure; Ti-W-Cr based brown with a rutile crystalline structure; Fe-Cr-Al based brown with a hematite crystalline structure; Al-Mn based pink with corundum crystalline structure; Ti-Sb-Cr based orange with rutile crystalline structure or Zr-Si-V based blue with zircon crystalline structure.

5. White, translucent and colourable ceramic compound based on a calcium sodium frit, according to the first claim, **characterised by** being able to increase its whiteness with the addition of aluminas and opacifiers such as zirconium silicate.

6. Use for the manufacture of the white, translucent and colourable ceramic compound based on a calcium-sodium frit according to the first claim, **characterised in that** it can be used for the manufacture of pressed and/or extruded ceramic parts of any thickness and format.

7. Use for the manufacture of the white, translucent and colourable ceramic compound based on a calcium sodium frit, according to the first claim, **characterised in that** it can be used for the manufacture of large format slabs in which the different blanks and colours to be developed, from the claimed composition, can be mixed throughout its mass (even in the form of veins imitating natural stone) without causing deformations and stresses in the final fired board.
